# EUROPEAN PATENT SPECIFICATION

(11) **EP 4 312 053 B1**
(45) Date of publication and mention of the grant of the patent: **18.11.2026**
(21) Application number: 22187754.1
(22) Date of filing: 29.07.2022
(51) Int. Cl.: G01S 13/86, G01S 13/931, G01S 7/40, G01S 7/41

(54) **ONLINE MAGNITUDE CALIBRATION OF RADAR SENSOR BASED ON RADAR MAP OF KNOWN OBJECTS**
ONLINE SIGNALSTÄRKENKALIBRATIONSVERFAHREN EINES RADARSENSORS BASIEREND AUF EINER RADARKARTE BEKANNTER OBJEKTE
ONLINE ÉTALONNAGE DE MAGNITUDE D'UN CAPTEUR DE RADAR EN FONCTION D'UNE CARTE DE RADAR D'OBJETS CONNUS

(43) Date of publication of application: 31.01.2024
(73) Proprietor: GM Cruise Holdings LLC, San Francisco CA 94103 (US)
(72) Inventor: KUSCHK, Georg, 95521 Ottobrunn (DE); UNZUETA CANALS, Marc, 95521 Ottobrunn (DE); MEYER, Michael, 95521 Ottobrunn (DE); MÖLLER, Sven, 95521 Ottobrunn (DE)
(74) Representative: Manitz Finsterwald Patent- und Rechtsanwaltspartnerschaft mbB

(56) References cited:
- WO-A1-2021/138204
- US-A1- 2019 162 820

## Description

### BACKGROUND

An autonomous vehicle is a motorized vehicle that can navigate without a human driver. An exemplary autonomous vehicle includes a plurality of sensor systems, such as, but not limited to, a camera sensor system, a light detection and ranging (LIDAR) sensor system, or a radio detection and ranging (RADAR) sensor system, amongst others. The autonomous vehicle operates (i.e., steering, braking, propulsion, etc.) based upon sensor signals from the sensor systems.

Some vehicles use multiple sensors of the same given type, such as multiple radar sensors, so that the vehicle has a larger field of view than a single such sensor would ordinarily provide. Since the autonomous vehicle depends on the sensor systems to provide information of the surrounding environment to operate safely without a human driver, it is imperative that the sensor systems provide accurate information. For a variety of reasons, such as, but not limited to, differences between sensors, obstructed views of the environment around the vehicle, manufacturing defects or other discrepancies in sensors, in vehicles, and/or in mounting hardware, and prolonged exposure to the environment, sensor measurements may not be an accurate representative of an environment nearby the vehicle.

To ensure accuracy and safety, sensor systems, such as radar sensor systems, should be calibrated often.

US 2019/162820 A1 discloses an automated vehicle sensor calibration system that uses known targets, which can be standard targets or common static objects like stop signs or light poles. The system utilizes a digital map that indicates the coordinates and an expected-attribute (e.g., radar return signal strength) of these targets. During operation, the system's controller compares a detectedattribute from the sensor's measurement of a target with the expected-attribute retrieved from the digital map. If the difference between the detected and expected attributes exceeds a correction threshold, the controller determines a correctionfactor, such as a gain or offset value, which is then used to adjust the sensor's output and perform the calibration.

WO 2021 /138204 A1 discloses a method for online calibration of a radar system on a moving vehicle, which operates without the use of pre-stored map data. The method identifies static objects by analyzing clutter points from a series of radar scans. The calibration is performed by progressively tuning the boresight angle of the radar sensor in small increments and monitoring the trajectory pattern of the resulting clutter points. The system determines whether the points are converging or diverging. The calibration is achieved by identifying the boresight angle that causes the clutter points to converge (e.g., form a straight line), as this position corresponds to a minimum variance and is considered the correct calibration position.

### SUMMARY

The present invention provides a method of calibrating a radar sensor and a radar sensor located in an operating environment according to the independent claims.

Embodiments are given in the subclaims, the description and the drawings.

### BRIEF DESCRIPTION OF THE DRAWINGS

Fig. 1 is a functional block diagram of an exemplary radar sensor.
Fig. 2 is a functional block diagram of an exemplary autonomous vehicle.
Fig. 3 is a graphical illustration of exemplary radar data and an example conversion function that can be applied to the radar data.
Fig. 4 is a flow diagram that illustrates an exemplary methodology for calibrating a radar sensor.
Fig. 5 is an exemplary computing system.

### DETAILED DESCRIPTION

Various technologies pertaining to the calibration of a radar sensor are described herein. With more particularity, technologies described herein relate to calibrating a radar sensor using a radar map of known static objects in an operational environment of the radar sensor. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Further, as used herein, the terms "component", "system", and "module" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices. Further, as used herein, the term "exemplary" is intended to mean serving as an illustration or example of something and is not intended to indicate a preference.

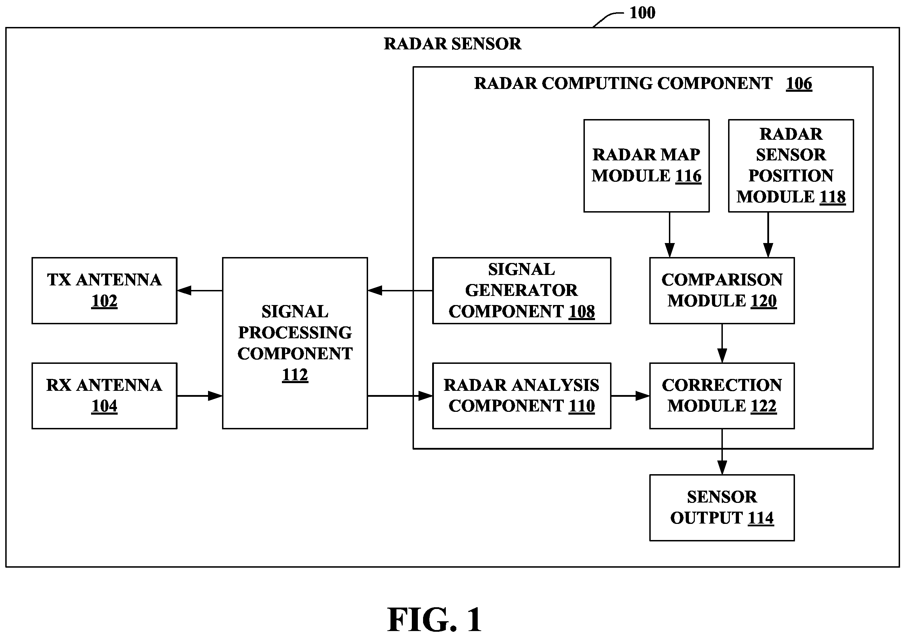

Fig. 1 is a high-level illustration of an exemplary radar sensor 100. The radar sensor 100 may be any suitable radar sensor 100. In the illustrated implementation, the radar sensor 100 includes a transmit antenna 102, a receive antenna 104, and a radar computing component 106. Briefly, the radar computing component 106 is configured to prepare radar signals that are transmitted by the transmit antenna 102, and to compute object solutions indicating estimated positions and/or velocities of objects based upon radar returns received by the receive antenna 104. In exemplary implementations, various components of the radar sensor 100 can be integrated as a same system-on-a-chip (SoC). In various implementations, the radar sensor 100 can be employed on a vehicle, such as a land vehicle, an aircraft, to identify positions and velocities of objects in the operational environment of the vehicle.

The radar computing component 106 comprises a signal generator component 108 that prepares radar signals for transmission by way of the transmit antenna 102 and a radar analysis component 110 that analyzes the radar data received by the receive antenna 104. The radar sensor 100 is configured to repeatedly, or continuously, transmit radar signals (e.g., pulse sequences) by way of the transmit antenna 102, and to receive radar returns repeatedly, or continuously, by way of the receive antenna 104.

In exemplary implementations, the radar returns received by the receive antenna 104 comprise reflections, from objects in the operational environment of the radar sensor 100, of radar signals emitted by the transmit antenna 102. Responsive to receipt of radar returns from the operational environment of the radar sensor 100, the receive antenna 104 outputs an electrical signal that is indicative of the received radar returns. This electrical signal is referred to herein as a radar signal and is transmitted along one or more transmission lines in the radar sensor 100, as distinct from radar returns that are received by the receive antenna 104 as radiated signals propagating through air or free space in the operational environment of the radar sensor 100.

The radar sensor 100 further includes a signal processing component 112. The signal processing component 112 receives a radar signal from the receive antenna 104. The signal processing component 112, for instance, can capture a plurality of radar returns from a plurality of objects in an operating environment. The signal processing component 112 is configured to perform various analog signal processing operations over radar signals received from the receive antenna 104. By way of example, and not limitation, the signal processing component 112 can perform various mixing, filtering, and amplification operations on radar signals output by the receive antenna 104. The signal processing component 112 can be configured to perform a variety of these signal processing operations (e.g., mixing) based further upon a radar signal transmitted by the transmit antenna 102.

The radar computing component 106 receives the radar data via the signal processing component 112. The radar analysis component 110 of the radar computing component 106 is configured to determine properties of the each of the objects in the operational environment of the radar sensor 100 based upon the radar data. In a non-limiting example, the radar analysis component 110 can compute a range, a bearing, and/or a velocity of an object in the operational environment of the radar sensor 100 based upon the radar data. The radar sensor 100 also includes a sensor output 114 indicative of the analyzed radar data.

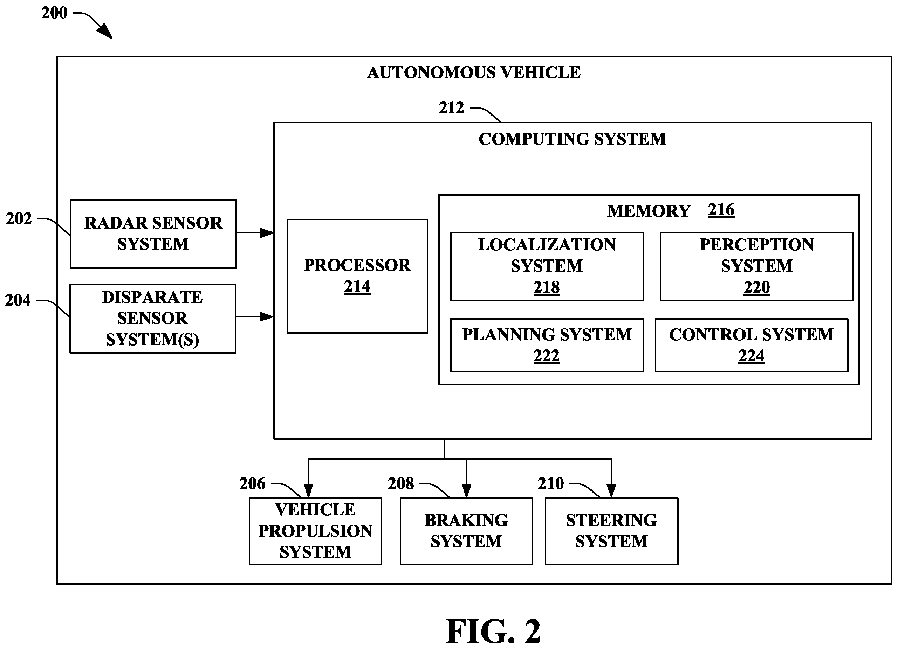

Various technologies described herein are suitable for use in connection with an autonomous vehicle (AV) that employs a radar system to facilitate navigation about roadways. Referring to Fig. 2, an exemplary AV 200 is illustrated, wherein the AV 200 can navigate about roadways without human conduction based upon sensor signals output by sensor systems of the AV 200. The AV 200 includes a plurality of sensor systems 202-204. The sensor systems 202-204 may be of different types. The sensor systems 202-204 include a radar sensor system 202 and disparate sensor system(s) 204 (e.g., substantially any number and types of sensor systems in addition to the radar sensor system 202). The radar sensor system 202 can be or include the radar sensor 100 (or a plurality of radar sensors each similar to the radar sensor 100). The disparate sensor system(s) 204, for example, can include a lidar sensor system, a camera (image) system, and/or a sonar system. Other exemplary sensor systems that can additionally or alternatively be included in the disparate sensor system(s) 204 include GPS sensor systems, inertial sensor systems, infrared sensor systems, and the like. The various sensor systems 202-204 are arranged about the AV 200. The sensor systems 202-204 are configured to repeatedly (e.g., continuously, or periodically) output sensor data that is representative of objects and conditions in the driving environment of the AV 200.

The AV 200 further includes several mechanical systems that are used to effectuate appropriate motion of the AV 200. For instance, the mechanical systems can include but are not limited to, a vehicle propulsion system 206, a braking system 208, and a steering system 210. The vehicle propulsion system 206 may be an electric engine, a combustion engine, or a combination thereof. The braking system 208 can include an engine brake, brake pads, actuators, a regenerative braking system, and/or any other suitable componentry that is configured to assist in decelerating the AV 200. The steering system 210 includes suitable componentry that is configured to control the direction of movement of the AV 200.

The AV 200 additionally comprises a computing system 212 that is in communication with the sensor systems 202-204 and is further in communication with the vehicle propulsion system 206, the braking system 208, and the steering system 210. The computing system 212 includes a processor 214 and memory 216 that includes computer-executable instructions that are executed by the processor 214. In an example, the processor 214 can be or include a graphics processing unit (GPU), a plurality of GPUs, a central processing unit (CPU), a plurality of CPUs, an application-specific integrated circuit (ASIC), a microcontroller, a programmable logic controller (PLC), a field programmable gate array (FPGA), or the like.

The memory 216 comprises a localization system 218, a perception system 220, a planning system 222, and a control system 224. Briefly, the localization system 218 is configured to determine a local position of the AV 200. The perception system 220 is configured to identify the presence of objects and/or characteristics of objects in the driving environment of the AV 200 based upon sensor data output by the sensor systems 202-204. The planning system 222 is configured to plan a route and/or a maneuver of the AV 200 based upon data pertaining to objects in the driving environment that are output by the perception system 220. The control system 224 is configured to control the mechanical systems 206-210 of the AV 200 to effectuate appropriate motion to cause the AV 200 to execute a maneuver planned by the planning system 222.

The perception system 220 is configured to identify objects in proximity to the AV 200 that are captured in sensor signals output by the sensor systems 202-204. By way of example, the perception system 220 can be configured to identify the presence of an object in the driving environment of the AV 200 based upon images generated by a camera system included in the disparate sensor system(s) 204. In another example, the perception system 220 can be configured to determine a presence and position of an object based upon radar data output by the radar sensor system 202. In exemplary implementations, the radar sensor system 202 can include one or more radar sensors 100. In such implementations, the perception system 220 can be configured to identify a position of an object in the driving environment of the AV 200 based upon the estimated range output by the radar sensor 100.

The AV 200 can be included in a fleet of AVs that are in communication with a common server computing system. In these implementations, the server computing system can control the fleet of AVs such that radar sensor systems of AVs operating in a same driving environment (e.g., within line of sight of one another, or within a threshold distance of one another) employ different pulse sequence carrier frequencies. In an exemplary implementation, a radar sensor system of a first AV can be controlled so as not to transmit pulse sequences having same center frequencies as pulse sequences transmitted by a radar sensor system of a second AV at the same time. In further implementations, the radar sensor system of the first AV can be controlled to transmit pulse sequences in a different order than a radar sensor system of a second AV. For instance, the radar sensor system of the first AV can be configured to transmit a set of pulse sequences at four different center frequencies A, B, C, and D in an order A, B, C, D. The radar sensor system of the second AV can be configured to transmit pulse sequences using a same set of center frequencies in a frequency order B, A, D, C. Such configurations can mitigate the effects of interference when multiple AVs that employ radar sensor systems are operating in a same driving environment.

Reference is again made to Fig. 1. The radar sensor 100 is calibrated with the use of a radar map of the environment that the radar sensor 100 is operating in (i.e., the operating environment). To that end, in an exemplary implementation, the radar sensor 100 can include a radar map module 116. The radar map module 116 is configured to access a predetermined radar map of radar data for known static objects in the operating environment. Examples of known static objects that can be represented in the predetermined radar map can include signs, buildings, bridges, or substantially any other static object that remains fixed in the environment. According to an example, the radar sensor 100 can include the predetermined radar map, which can be accessed by the radar map module 116. Pursuant to another example, the computing system 212 of the autonomous vehicle 200 can store the predetermined radar map (e.g., the radar map can be stored in a data store of the computing system 212); following this example, the radar map module 116 can access the predetermined radar map retained by the computing system 212 of the autonomous vehicle 200. In some implementations, the predetermined radar map may only include a select group of known static objects in the operating environment for use in calibrating the radar sensor 100.

The radar map includes expected radar reflectance values for a plurality of known static objects in the operating environment as a function of range and angle of the radar sensor 100. For example, the localized position and orientation of the radar sensor within the map is defined by coordinates X1, Y1, Z1 with three rotation angles (RX, RY, RZ (i.e., yaw, pitch, and roll). For a static object at map coordinates X2, Y2, the radar map will contain an expected reflectance value that a radar sensor at coordinates X1, Y1, Z1, and orientation RX, RY, RZ should receive from the given static object. In this way, the radar map provides information regarding how the reflectance value is impacted by the range from the object and by the orientation of the radar sensor.

The radar map may be created, for example, by gathering radar data from radar systems of AVs as those AVs drive around the operating environment (e.g., town, city, etc.). While driving around the operating environment, the radar system of each of the AVs records the position and orientation of the radar sensors of the radar systems of the AVs and records the magnitude of the radar return and location of the object generating the return.

The radar sensor 100 further includes a radar sensor position module 118 configured to identify a location and orientation of the radar sensor 100. The radar sensor position module 118 may utilize any suitable sensing devices for determining the position and the orientation of the radar sensor 100 at a given time, such as GPS sensor systems and inertial sensor systems, which may already be associated with the radar sensor system 202 or the AV 200. Additionally or alternatively, the radar sensor position module 118 can receive information specifying the local position of the AV 200 from the localization system 218 of the AV 200; the radar sensor position module 118 can further determine the position and orientation of the radar sensor 100 based at least in part on the information specifying the local position of the AV 200. Since range and orientation of the radar sensor 100 impact the magnitude of the radar return, the range and orientation information provided by the radar sensor position module 118 is used to calibrate the radar sensor 100 as described below.

The radar sensor 100 further includes a comparison module 120 configured to identify expected reflectance values for each of the known static objects based on the identified location and orientation of the radar sensor 100. The comparison module 120 is configured to communicate with the radar map module 116 and the radar sensor position module 118 for this purpose. In particular, the comparison module 120 identifies the location of an object from the radar returns. The comparison module 120 then communicates with the radar sensor position module 118 to identify the position and orientation of the radar sensor 100 associated with the radar return (i.e., the position and orientation of the radar sensor 100 when that radar signal, associated with the radar return, was sent from the radar sensor). The comparison module 120 then communicates with the radar map module 116 to identify the expected reflectance value for the object based on the position and the orientation identified from the radar sensor position module 118.

The radar sensor 100 further includes a correction module 122. The correction module 122 is configured to calculate a conversion function to adjust the magnitudes associated with each of the radar returns of the known static objects to estimated reflectance values based on the expected reflectance values for each of the known static objects. As part of the invention as claimed, the correction module 122 takes the actual radar return magnitudes for the known static objects and the expected reflectance value for each of the known static objects, as determined by the comparison module 120, and determines a conversion function (e.g., curve fitting) to adjust the actual radar return magnitudes to values that approximate the expected values. Furthermore, the conversion function is in the form of a polynomial equation, which can be any order polynomial equation suitable for use as a conversion function.

The correction module 122 is also configured to adjust the output of the radar sensor 100 based on the conversion function. For example, the sensor output 114 may represent a magnitude of the radar signal. The correction module 122 may use the conversion function to adjust the magnitude of the sensor output 114. This adjusted sensor output is then used by the computing system 212 of the AV 200 during operation. Thus, radar returns from non-static objects or objects other than those represented in the radar map can be adjusted by the correction module 122 using the conversion function. Accordingly, the correction module 122 can adjust the magnitudes associated with each of the radar returns from the plurality of objects (i.e., the known static object(s) as well as other object(s) such as non-static object(s) or objects other than those represented in the radar map) based on the conversion function.

In various embodiments, it is contemplated that the memory 216 of the computing system 212 of the autonomous vehicle 200 can additionally or alternatively include one or more of the radar map module 116, the radar sensor position module 118, the comparison module 120, and/or the correction module 112.

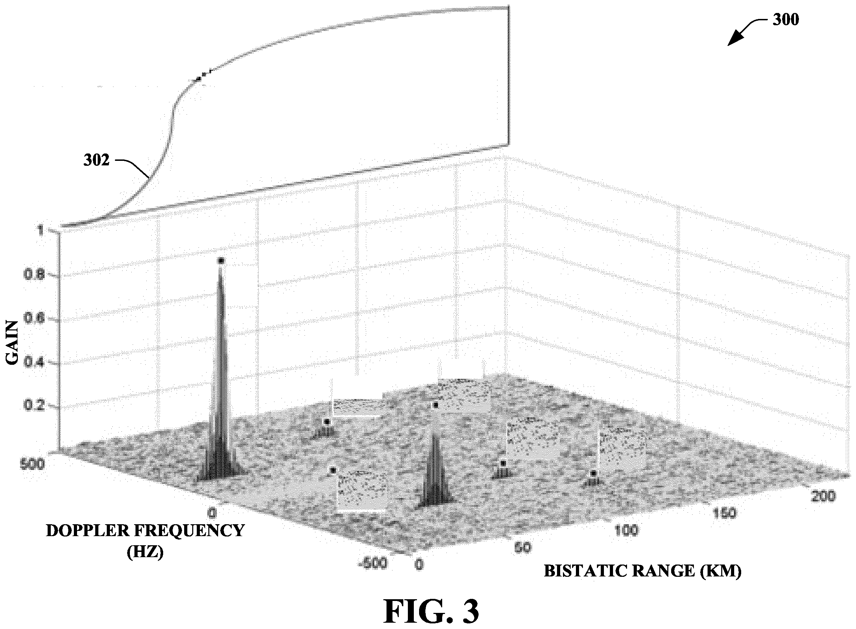

Referring to Fig. 3, depicted is a graphical illustration 300 of exemplary radar data and an example conversion function 302 that can be applied to the radar data. As noted above, the magnitudes (e.g., gains) associated with the actual radar returns for the known static objects can be obtained. For instance, Fig. 3 illustrates a magnitude map of the actual radar returns. Further, utilizing the approaches described herein, the conversion function 302 can be determined from the magnitude map of the actual radar returns.

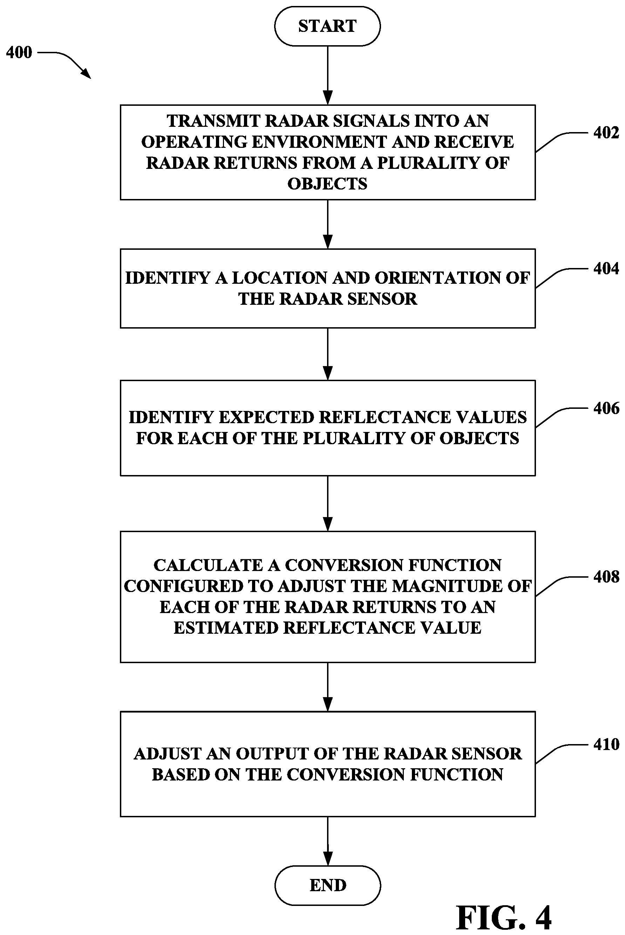

Fig. 4 illustrates an exemplary methodology relating to calibrating a radar sensor. While the methodology is shown and described as being a series of acts that are performed in a sequence, it is to be understood and appreciated that the methodology is not limited by the order of the sequence. For example, some acts can occur in a different order than what is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a sub-routine, programs, a thread of execution, and/or the like. Still further, results of acts of the methodologies can be stored in a computer-readable medium, displayed on a display device, and/or the like.

Fig. 4 illustrates a flow chart of an exemplary method 400 for calibrating the radar sensor 100. In particular, at step 402 during operation of the radar sensor system 202, the radar sensor 100 transmits radar signals from the transmit antenna 102 into the operating environment and receives radar returns at the receive antenna 104 from a plurality of objects in the operating environment. At least a subset of the objects are known static objects. The radar returns are processed within the radar sensor 100 by the signal processing component 112 and analyzed by the radar analysis component 110 as described above. At step 404, the radar sensor position module 118 identifies the position and the orientation of the radar sensor 100 at the time the radar signal was transmitted.

At step 406, the comparison module 120 identifies the expected reflectance values for each of the selected known static objects in the radar returns. To do so, the comparison module 120 uses the location of the known static objects from the radar returns, as determined by the radar analysis component 110 of the radar sensor 100, the position and orientation of the radar sensor 100 associated with the radar return as determined by the radar sensor position module 118, and the expected reflectance value for the known static objects from the radar map module 116 based on the position and the orientation of the radar sensor 100.

At step 408, the correction module 122 compares the actual magnitude of each the plurality of selected known static objects from the radar return with the expected reflectance value for each of those known static objects as identified by the comparison module 120. The correction module 122 then uses this set of data to determine a conversion function (e.g., a polynomial equation) that fits the dataset. At step 410, the correction module 122 then uses the conversion function to adjust the output of the radar sensor 100 (i.e., calibrate the sensor) so that the output is an estimated reflectance value that more closely resembles the expected reflectance values. The radar sensor output can be repeatedly or continuously adjusted in this manner during operation of the radar sensor 100. Furthermore, a faulty radar sensor can be easily and timely identified based on the difference between the magnitude of the radar return and the expected reflectance value. A large difference can be flagged by the radar system 202 as being indicative of a faulty radar sensor.

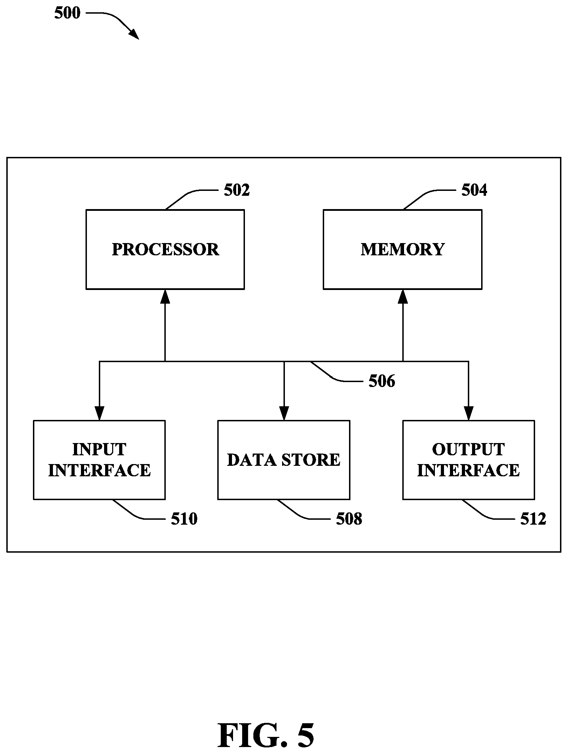

Referring now to Fig. 5, a high-level illustration of an exemplary computing device 500 that can be used in accordance with the systems and methodologies disclosed herein is illustrated. For instance, the computing device 500 may be or include the computing system 212. The computing device 500 includes at least one processor 502 that executes instructions that are stored in a memory 504. The instructions may be, for instance, instructions for implementing functionality described as being carried out by one or more modules, components, or systems discussed above or instructions for implementing one or more of the methods described above. The processor 502 may be a GPU, a plurality of GPUs, a CPU, a plurality of CPUs, a multi-core processor, etc. The processor 502 may access the memory 504 by way of a system bus 506. In addition to storing executable instructions, the memory 504 may also store radar data, beamformed radar data, neural network configurations, etc.

The computing device 500 additionally includes a data store 508 that is accessible by the processor 502 by way of the system bus 506. The data store 508 may include executable instructions, radar data, beamformed radar data, embeddings of these data in latent spaces, etc. The computing device 500 also includes an input interface 510 that allows external devices to communicate with the computing device 500. For instance, the input interface 510 may be used to receive instructions from an external computing device, etc. The computing device 500 also includes an output interface 512 that interfaces the computing device 500 with one or more external devices. For example, the computing device 500 may transmit control signals to the vehicle propulsion system 206, the braking system 208, and/or the steering system 210 by way of the output interface 512.

Additionally, while illustrated as a single system, it is to be understood that the computing device 500 may be a distributed system. Thus, for instance, several devices may be in communication by way of a network connection and may collectively perform tasks described as being performed by the computing device 500.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include FPGAs, ASICs, Application-specific Standard Products (ASSPs), SOCs, Complex Programmable Logic Devices (CPLDs), etc.

What has been described above includes examples of one or more implementations. It is, of course, not possible to describe every conceivable modification and alteration of the above devices or methodologies for purposes of describing the aforementioned aspects, but one of ordinary skill in the art can recognize that many further modifications and permutations of various aspects are possible. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A method (400) of calibrating a radar sensor (100), comprising:
transmitting (402) a radar signal into an operating environment;
receiving (402) radar returns from a plurality of objects in the operating environment based on the radar signal sent, each of the radar returns having a magnitude associated with each of the plurality of objects, and at least a subset of the objects are known static objects;
identifying (404) a location and orientation of the radar sensor (100) when the radar signal was sent;
identifying (406) an expected reflectance value for each of the plurality of known static objects;
calculating (408) a conversion function (302) configured to adjust the magnitude associated with each of the radar returns from the known static objects to an estimated reflectance value based on the expected reflectance value for each of the plurality of known static objects;
adjusting (410) an output of the radar sensor (100) based on the conversion function (302),
**characterized in that**:
the conversion function is a polynomial equation calculated to perform curve fitting when adjusting the magnitude associated with respective radar returns.

2. The method (400) according to claim 1, wherein identifying expected reflectance values for each of the plurality of known static objects further comprises accessing a predetermined radar map of the operating environment of the radar sensor (100) comprising the plurality of known static objects, wherein the predetermined radar map identifies expected reflectance values for each of the plurality of known static objects.

3. The method (400) according to claim 2, wherein each of the plurality of known static objects is a static object in the operating environment.

4. The method (400) according to at least one of claims 2 to 3, wherein the expected reflectance values are a function of the location and orientation of the radar sensor (100).

5. The method (400) according to at least one of claims 2 to 4, wherein the predetermined radar map identifies the expected reflectance values for a set of known static objects in the operating environment.

6. The method (400) according to at least one of claims 1 to 5, wherein the conversion function (302) is continuously updated during operation of the radar sensor (100) based on receiving additional radar returns.

7. The method (400) according to at least one of claims 1 to 6, wherein the output of the radar sensor (100) is continuously adjusted based on the conversion function (302) during operation of the radar sensor (100).

8. The method (400) according to at least one of claims 1 to 7, wherein adjusting the output of the radar sensor (100) based on the conversion function (302) further comprises adjusting the magnitudes associated with each of the radar returns from the plurality of objects based on the conversion function (302).

9. A radar sensor (100) located in an operating environment, the radar sensor (100) comprising:
a signal processing component (112) configured to capture a plurality of radar returns from a plurality of objects in the operating environment, wherein the plurality of radar returns from the plurality of objects are captured based on a radar signal sent from the radar sensor (100), and at least a subset of the objects are known static objects;
a radar map module (116) configured to access a predetermined radar map of radar data for the plurality of known static objects in the operating environment;
a radar sensor position module (118) configured to identify a location and orientation of the radar sensor (100) when the radar signal was sent;
a comparison module (120) configured to identify expected reflectance values for each of the plurality of known static objects based on the location and orientation of the radar sensor (100); and
a correction module (122) configured to calculate a conversion function (302) to adjust a magnitude of each of the radar returns for the known static objects to an estimated reflectance value based on the expected reflectance values for each of the plurality of known static objects, the correction module further configured to adjust an output of the radar sensor (100) based on the conversion function (302),
**characterized in that**:
the conversion function is a polynomial equation calculated to perform curve fitting when adjusting the magnitude associated with respective radar returns.

10. The radar sensor (100) according to claim 9, wherein each of the plurality of known static objects is a static object in the operating environment.

11. The radar sensor (100) according to at least one of claims 9 to 10, wherein the correction module (122) continuously updates the conversion function (302) during operation of the radar sensor (100) based on the radar returns.

12. The radar sensor (100) according to at least one of claims 9 to 11, wherein the correction module (122) continuously adjusts the output of the radar sensor (100) based on the conversion function (302) during operation of the radar sensor (100).

13. The radar sensor (100) according to at least one of claims 9 to 12, wherein adjusting the output of the radar sensor (100) based on the conversion function (302) further comprises adjusting the magnitudes associated with each of the radar returns from the plurality of objects based on the conversion function (302).

14. An autonomous vehicle (200) for traversing an operating environment, the autonomous vehicle (200) comprising the radar sensor (100) according to any one of claims 9 to 13.

## Patentansprüche

1. Verfahren (400) zum Kalibrieren eines Radarsensors (100), umfassend:
Senden (402) eines Radarsignals in eine Betriebsumgebung;
Empfangen (402) von Radarechos von einer Vielzahl von Objekten in der Betriebsumgebung auf der Grundlage des gesendeten Radarsignals, wobei jedes der Radarechos einen jedem der Vielzahl von Objekten zugeordneten Betrag aufweist, und mindestens eine Teilmenge der Objekte bekannte statische Objekte sind;
Identifizieren (404) einer Position und Orientierung des Radarsensors (100), wenn das Radarsignal gesendet wurde;
Identifizieren (406) eines erwarteten Reflexionswerts für jedes der Vielzahl von bekannten statischen Objekte;
Berechnen (408) einer Umrechnungsfunktion (302), die eingerichtet ist, den jedem der Radarechos von den bekannten statischen Objekten zugeordneten Betrag auf einen geschätzten Reflexionswert auf der Grundlage des erwarteten Reflexionswerts für jedes der Vielzahl von bekannten statischen Objekten anzupassen;
Anpassen (410) einer Ausgabe des Radarsensors (100) auf der Grundlage der Umrechnungsfunktion (302),
**dadurch gekennzeichnet, dass**:
die Umrechnungsfunktion eine Polynomgleichung ist, die berechnet wird, um beim Anpassen des den jeweiligen Radarechos zugeordneten Betrags eine Kurvenanpassung durchzuführen.

2. Verfahren (400) nach Anspruch 1, wobei das Identifizieren erwarteter Reflexionswerte für jedes der Vielzahl von bekannten statischen Objekten ferner den Zugriff auf eine vorbestimmte Radarkarte der Betriebsumgebung des Radarsensors (100) umfasst, die die Vielzahl von bekannten statischen Objekten umfasst, wobei die vorbestimmte Radarkarte erwartete Reflexionswerte für jedes der Vielzahl von bekannten statischen Objekten identifiziert.

3. Verfahren (400) nach Anspruch 2, wobei jedes der Vielzahl von bekannten statischen Objekten ein statisches Objekt in der Betriebsumgebung ist.

4. Verfahren (400) nach mindestens einem der Ansprüche 2 bis 3, wobei die erwarteten Reflexionswerte eine Funktion der Position und Orientierung des Radarsensors (100) sind.

5. Verfahren (400) nach mindestens einem der Ansprüche 2 bis 4, wobei die vorbestimmte Radarkarte die erwarteten Reflexionswerte für eine Menge bekannter statischer Objekte in der Betriebsumgebung identifiziert.

6. Verfahren (400) nach mindestens einem der Ansprüche 1 bis 5, wobei die Umrechnungsfunktion (302) während des Betriebs des Radarsensors (100) auf der Grundlage des Empfangens zusätzlicher Radarechos kontinuierlich aktualisiert wird.

7. Verfahren (400) nach mindestens einem der Ansprüche 1 bis 6, wobei die Ausgabe des Radarsensors (100) auf der Grundlage der Umrechnungsfunktion (302) während des Betriebs des Radarsensors (100) kontinuierlich angepasst wird.

8. Verfahren (400) nach mindestens einem der Ansprüche 1 bis 7, wobei das Anpassen der Ausgabe des Radarsensors (100) auf der Grundlage der Umrechnungsfunktion (302) ferner das Anpassen der Beträge, die jedem der Radarechos von der Vielzahl von Objekten zugeordnet sind, auf der Grundlage der Umrechnungsfunktion (302) umfasst.

9. Radarsensor (100), der sich in einer Betriebsumgebung befindet, wobei der Radarsensor (100) umfasst:
eine Signalverarbeitungskomponente (112), die eingerichtet ist, eine Vielzahl von Radarechos von einer Vielzahl von Objekten in der Betriebsumgebung zu erfassen, wobei die Vielzahl von Radarechos von der Vielzahl von Objekten auf der Grundlage eines vom Radarsensor (100) gesendeten Radarsignals erfasst wird, und mindestens eine Teilmenge der Objekte bekannte statische Objekte sind;
ein Radarkartenmodul (116), das eingerichtet ist, auf eine vorbestimmte Radarkarte von Radardaten für die Vielzahl von bekannten statischen Objekten in der Betriebsumgebung zuzugreifen;
ein Radarsensorpositionsmodul (118), das eingerichtet ist, eine Position und Orientierung des Radarsensors (100) zu identifizieren, wenn das Radarsignal gesendet wurde;
ein Vergleichsmodul (120), das eingerichtet ist, erwartete Reflexionswerte für jedes der Vielzahl von bekannten statischen Objekten auf der Grundlage der Position und Orientierung des Radarsensors (100) zu identifizieren; und
ein Korrekturmodul (122), das eingerichtet ist, eine Umrechnungsfunktion (302) zu berechnen, um einen Betrag jedes der Radarechos für die bekannten statischen Objekte auf einen geschätzten Reflexionswert auf der Grundlage der erwarteten Reflexionswerte für jedes der Vielzahl von bekannten statischen Objekten anzupassen, wobei das Korrekturmodul ferner eingerichtet ist, eine Ausgabe des Radarsensors (100) auf der Grundlage der Umrechnungsfunktion (302) anzupassen,
**dadurch gekennzeichnet, dass**:
die Umrechnungsfunktion eine Polynomgleichung ist, die berechnet wird, um beim Anpassen des den jeweiligen Radarechos zugeordneten Betrags eine Kurvenanpassung durchzuführen.

10. Radarsensor (100) nach Anspruch 9, wobei jedes der Vielzahl von bekannten statischen Objekten ein statisches Objekt in der Betriebsumgebung ist.

11. Radarsensor (100) nach mindestens einem der Ansprüche 9 bis 10, wobei das Korrekturmodul (122) die Umrechnungsfunktion (302) während des Betriebs des Radarsensors (100) auf der Grundlage der Radarechos kontinuierlich aktualisiert.

12. Radarsensor (100) nach mindestens einem der Ansprüche 9 bis 11, wobei das Korrekturmodul (122) die Ausgabe des Radarsensors (100) auf der Grundlage der Umrechnungsfunktion (302) während des Betriebs des Radarsensors (100) kontinuierlich anpasst.

13. Radarsensor (100) nach mindestens einem der Ansprüche 9 bis 12, wobei das Anpassen der Ausgabe des Radarsensors (100) auf der Grundlage der Umrechnungsfunktion (302) ferner das Anpassen der Beträge, die jedem der Radarechos von der Vielzahl von Objekten zugeordnet sind, auf der Grundlage der Umrechnungsfunktion (302) umfasst.

14. Autonomes Fahrzeug (200) zum Durchqueren einer Betriebsumgebung, wobei das autonome Fahrzeug (200) den Radarsensor (100) nach einem der Ansprüche 9 bis 13 umfasst.

## Revendications

1. Procédé (400) d'étalonnage d'un capteur radar (100), comprenant les étapes consistant à :
émettre (402) un signal radar dans un environnement opérationnel ;
recevoir (402) des retours radar provenant d'une pluralité d'objets dans l'environnement opérationnel sur la base du signal radar envoyé, chacun des retours radar ayant une amplitude associée à chacun des objets de la pluralité d'objets, et au moins un sous-ensemble des objets étant des objets statiques connus ;
identifier (404) une position et une orientation du capteur radar (100) lorsque le signal radar a été envoyé ;
identifier (406) une valeur de réflectance attendue pour chacun des objets statiques connus de la pluralité d'objets ;
calculer (408) 'une fonction de conversion (302) configurée pour ajuster l'amplitude associée à chacun des retours radar provenant des objets statiques connus à une valeur de réflectance estimée sur la base de la valeur de réflectance attendue pour chacun des objets statiques connus de la pluralité d'objets ;
ajuster (410) 'une sortie du capteur radar (100) sur la base de la fonction de conversion (302),
**caractérisé en ce que**:
la fonction de conversion est une équation polynomiale calculée pour effectuer un ajustement de courbe lors de l'ajustement de l'amplitude associée aux retours radar respectifs.

2. Procédé (400) selon la revendication 1, dans lequel l'étape consistant à identifier des valeurs de réflectance attendues pour chacun de la pluralité d'objets statiques connus comprend en outre d'accéder à une carte radar prédéterminée de l' environnement opérationnel du capteur radar (100) comprenant la pluralité d'objets statiques connus, la carte radar prédéterminée identifiant des valeurs de réflectance attendues pour chacun de la pluralité d'objets statiques connus.

3. Procédé (400) selon la revendication 2, dans lequel chacun de la pluralité d'objets statiques connus est un objet statique dans l'environnement opérationnel.

4. Procédé (400) selon l'une au moins des revendications 2 à 3, dans lequel les valeurs de réflectance attendues sont une fonction de la position et de l'orientation du capteur radar (100).

5. Procédé (400) selon l'une au moins des revendications 2 à 4, dans lequel la carte radar prédéterminée identifie les valeurs de réflectance attendues pour un ensemble d'objets statiques connus dans l'environnement opérationnel.

6. Procédé (400) selon l'une au moins des revendications 1 à 5, dans lequel la fonction de conversion (302) est mise à jour en continu pendant le fonctionnement du capteur radar (100) sur la base de la réception de retours radar supplémentaires.

7. Procédé (400) selon l'une au moins des revendications 1 à 6, dans lequel la sortie du capteur radar (100) est ajustée en continu sur la base de la fonction de conversion (302) pendant le fonctionnement du capteur radar (100).

8. Procédé (400) selon l'une au moins des revendications 1 à 7, dans lequel l'étape consistant à ajuster la sortie du capteur radar (100) sur la base de la fonction de conversion (302) comprend en outre d'ajuster les amplitudes associées à chacun des retours radar provenant de la pluralité d'objets sur la base de la fonction de conversion (302).

9. Capteur radar (100) situé dans un environnement opérationnel, le capteur radar (100) comprenant :
un composant de traitement de signal (112) configuré pour capturer une pluralité de retours radar provenant d'une pluralité d'objets dans l'environnement opérationnel, la pluralité de retours radar provenant de la pluralité d'objets étant capturée sur la base d'un signal radar envoyé par le capteur radar (100), et au moins un sous-ensemble des objets étant des objets statiques connus ;
un module de carte radar (116) configuré pour accéder à une carte radar prédéterminée de données radar pour la pluralité d'objets statiques connus dans l'environnement opérationnel ;
un module de position de capteur radar (118) configuré pour identifier une position et une orientation du capteur radar (100) lorsque le signal radar a été envoyé ;
un module de comparaison (120) configuré pour identifier des valeurs de réflectance attendues pour chacun de la pluralité d'objets statiques connus sur la base de la position et de l'orientation du capteur radar (100) ; et
un module de correction (122) configuré pour calculer une fonction de conversion (302) pour ajuster une amplitude de chacun des retours radar pour les objets statiques connus à une valeur de réflectance estimée sur la base des valeurs de réflectance attendues pour chacun de la pluralité d'objets statiques connus, le module de correction étant en outre configuré pour ajuster une sortie du capteur radar (100) sur la base de la fonction de conversion (302),
**caractérisé en ce que** :
la fonction de conversion est une équation polynomiale calculée pour effectuer un ajustement de courbe lors de l'ajustement de l'amplitude associée aux retours radar respectifs.

10. Capteur radar (100) selon la revendication 9, dans lequel chacun de la pluralité d'objets statiques connus est un objet statique dans l' environnement opérationnel.

11. Capteur radar (100) selon l'une au moins des revendications 9 à 10, dans lequel le module de correction (122) met à jour en continu la fonction de conversion (302) pendant le fonctionnement du capteur radar (100) sur la base des retours radar.

12. Capteur radar (100) selon l'une au moins des revendications 9 à 11, dans lequel le module de correction (122) ajuste en continu la sortie du capteur radar (100) sur la base de la fonction de conversion (302) pendant le fonctionnement du capteur radar (100).

13. Capteur radar (100) selon l'une au moins des revendications 9 à 12, dans lequel l'ajustement de la sortie du capteur radar (100) sur la base de la fonction de conversion (302) comprend en outre l'ajustement des amplitudes associées à chacun des retours radar provenant de la pluralité d'objets sur la base de la fonction de conversion (302).

14. Véhicule autonome (200) destiné à parcourir un environnement opérationnel, le véhicule autonome (200) comprenant le capteur radar (100) selon l'une des revendications 9 à 13.
